# DEMANDE DE BREVET EUROPEEN

(11) **EP 1 745 958 A2**
(43) Date de publication de la demande: **24.01.2007**
(21) Numéro de dépôt: 06300746.2
(22) Date de dépôt: 03.07.2006
(51) Int. Cl.: B60J 5/06

(54) **Dispositif de guidage d'une porte latérale coulissante pour véhicule automobile et porte coulissante équipée d'un tel dispositif de guidage**

(30) Priorité: 21.07.2005 FR 0507776
(71) Demandeur: PEUGEOT CITROËN AUTOMOBILES S.A., 78140 Velizy Villacoublay (FR)
(72) Inventeur: Nicolas, Daniel, 78360 Montesson (FR); Renaud, Michel, 92160 Antony (FR); Jourdan, Dominique, 27700 Hequeville (FR)

(57) **Abrégé**

L'invention concerne un dispositif de guidage d'une porte latérale (1) coulissante déplaçable entre une position de fermeture appliquée contre la carrosserie du véhicule et une position écartée de ladite carrosserie au moyen d'un mécanisme d'écartement (20). Ce mécanisme (20) comporte une bielle (21) en forme de V dont la pointe est articulée sur la porte (1) et comportant deux bras (23, 24) dont chaque extrémité est articulée sur des moyens de coulissement (30, 35) respectivement sur une coulisse supérieure (11) et une coulisse inférieure (12) d'un rail de guidage (10) s'étendant sur la longueur du véhicule.

## Description

La présente invention est relative à un dispositif de guidage d'une porte latérale coulissante pour véhicule automobile.

L'invention concerne également une porte coulissante équipée d'un tel dispositif de guidage.

Certains véhicules automobiles sont équipés d'au moins une porte latérale coulissante déplaçable entre une position de fermeture appliquée contre la carrosserie du véhicule et une position écartée de ladite carrosserie au moyen d'un mécanisme d'écartement.

Pour cela, le panneau de la porte coulissante est maintenu, lors de ses déplacements, généralement en trois points qui comportent des chariots de guidage équipés de galets circulant dans des rails ayant un profil en U, fixés sur la carrosserie du véhicule. Dans la position correspondant à la porte fermée, la surface extérieure de la porte est alignée dans la continuité de l'ensemble de la carrosserie, aussi bien pour des questions esthétiques que pour des questions fonctionnelles.

Ainsi, le mouvement d'ouverture commence donc par une trajectoire oblique ayant pour but d'écarter la porte d'une valeur suffisante pour empêcher tout contact avec l'ensemble de la carrosserie pendant son déplacement.

Les rails de guidage sont disposés pour assurer une stabilité de la porte et comportent généralement un rail supérieur, un rail intermédiaire et un rail inférieur généralement associé au longeron de bas de caisse du châssis du véhicule automobile.

Pour assurer l'alignement correct en position de fermeture de la porte, la partie d'extrémité du rail inférieur dans la région correspondant à la fin de la fermeture de la porte, comporte une portion recourbée vers l'intérieur du véhicule dont la déviation dépend de la distance d'écartement compatible avec les déplacements de la porte.

L'extrémité de cette portion recourbée du rail inférieur ainsi que les organes de guidage coulissant sur ce rail lorsqu'ils sont arrivés en fin de course, pénètrent dans la structure des éléments constitutifs du longeron du châssis du véhicule.

Il en résulte donc un affaiblissement du châssis dans cette zone, surtout sensible en cas de choc latéral, et une notable complication de fabrication du châssis.

De plus, cette excroissance ainsi formée déborde généralement dans l'espace habitacle du véhicule et constitue une gêne au droit des pieds des occupants de ce véhicule.

Le but de l'invention est de proposer un dispositif de guidage d'une porte latérale coulissante qui permet d'éviter cet inconvénient.

L'invention a donc pour objet un dispositif de guidage d'une porte latérale coulissante pour véhicule automobile, déplaçable entre une position de fermeture appliquée contre la carrosserie du véhicule et une position écartée de ladite carrosserie au moyen d'un mécanisme d'écartement, caractérisé en ce que le mécanisme d'écartement comporte une bielle en forme de V dont la pointe est articulée sur la porte et comportant deux bras dont chaque extrémité est articulée sur des moyens de coulissement respectivement sur une coulisse supérieure et une coulisse inférieure d'un rail de guidage s'étendant sur la longueur du véhicule, l'une des coulisses comportant une portion d'extrémité décalée vers l'intérieur du véhicule dans la région correspondant à la fin de la fermeture de la porte.

Selon d'autres caractéristiques de l'invention :
- les bras de la bielle sont formés par un bras supérieur et un bras inférieur décalés l'un par rapport à l'autre dans une direction horizontale suivant la longueur du véhicule,
- la portion d'extrémité décalée vers l'intérieur du véhicule est ménagée sur la coulisse supérieure du rail de guidage,
- les moyens de coulissement du bras supérieur de la bielle comprennent un chariot comportant un galet porteur à axe horizontal destiné à coopérer avec la coulisse supérieure et deux galets de guidage à axes verticaux disposés de part et d'autre du galet porteur et destinés à coopérer avec les joues de ladite coulisse supérieure, et
- les moyens de coulissement du bras inférieur de la bielle sont formés par un galet à axe vertical destiné à coopérer avec les joues de la coulisse inférieure.

L'invention a également pour objet une porte coulissante pour véhicule automobile, caractérisée en ce qu'elle est équipée d'un dispositif de guidage entre une position de fermeture appliquée contre la carrosserie du véhicule et une position écartée de ladite carrosserie, tel que précédemment mentionné.

L'invention a aussi pour objet un véhicule automobile, caractérisé en ce qu'il comporte au moins une porte coulissante équipée d'un tel dispositif de guidage.

L'invention sera mieux comprise à la lecture de la description qui va suivre, donnée à titre d'exemple et faite en se référant aux dessins annexés, sur lesquels :
- la Fig. 1 est une vue schématique de dessus d'un dispositif de guidage d'une porte coulissante selon l'invention, lorsque la porte est fermée,
- la Fig. 2 est une vue en coupe transversale selon la ligne 2-2 de la Fig. 6,
- la Fig. 3 est une vue en coupe transversale selon la ligne 3-3 de la Fig. 6,
- la Fig. 4 est une vue transversale selon la ligne 4-4 de la Fig. 1,
- la Fig. 5 est une vue schématique de dessus du dispositif de guidage dans une position intermédiaire de la porte coulissante, et
- la Fig. 6 est une vue schématique de dessus du dispositif de guidage dans la position d'ouverture de la porte coulissante.

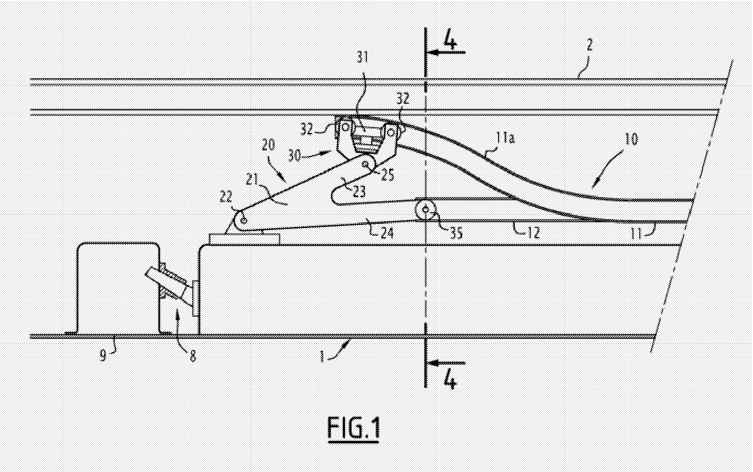

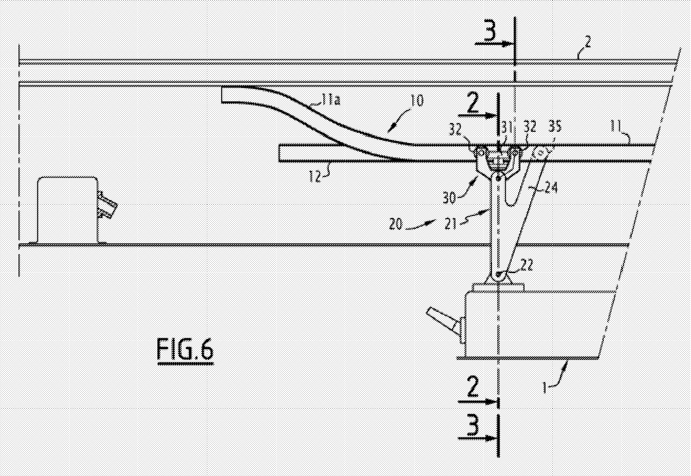

Sur les figures, on a représenté schématiquement une porte coulissante 1 qui est déplaçable au moyen d'un dispositif de guidage entre une position de fermeture (Fig. 1) appliquée contre la carrosserie du véhicule et une position écartée (Fig. 6) de cette carrosserie du véhicule.

Le dispositif de guidage de la porte coulissante 1 comprend, entre autres, un rail de guidage inférieur désigné dans son ensemble par la référence 10 et qui est disposé au niveau d'un longeron inférieur 2 du châssis du véhicule automobile.

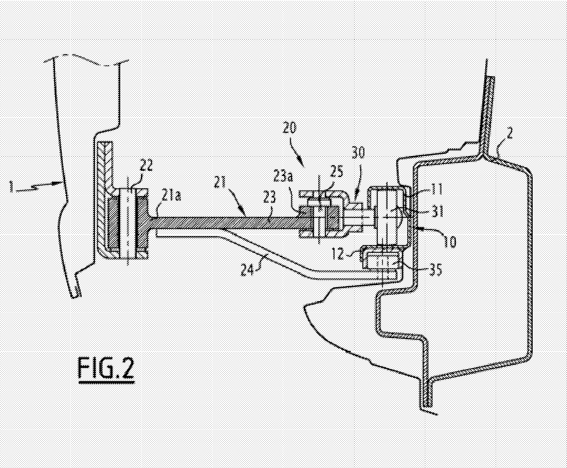

Ainsi que montré notamment sur les Figs. 1 et 2, le rail de guidage 10 comprend une coulisse supérieure 11 et une coulisse inférieure 12 s'étendant sur la longueur du véhicule.

L'une des coulisses 11 ou 12 et plus particulièrement la coulisse supérieure 11, comme dans l'exemple de réalisation représenté sur les figures, comporte une portion d'extrémité 11a courbe et décalée vers l'intérieur du véhicule dans la région correspondant à la fin de la fermeture de la porte 1, tandis que la coulisse inférieure 12 est rectiligne. En dehors de cette portion d'extrémité 11a courbe, les coulisses 11 et 12 se superposent.

Le dispositif de guidage de la porte 1 comprend également un mécanisme désigné dans son ensemble par la référence 20, d'écartement de cette porte 1 entre la position de fermeture et la position écartée de la carrosserie du véhicule automobile.

Ainsi que montré sur les Figs. 1 à 3, le mécanisme d'écartement 20 comporte une bielle 21 en forme de V dont la pointe 21a est reliée à la porte 1 par un axe d'articulation 22. Cette bielle 21 comporte deux bras, un bras supérieur 23 et un bras inférieur 24 décalés l'un par rapport à l'autre dans une direction horizontale suivant la longueur du véhicule. L'extrémité de chaque bras 23 et 24 est articulée sur des moyens de coulissement respectivement sur la coulisse supérieure 11 et sur la coulisse inférieure 12 du rail de guidage 10.

Les moyens de coulissement sur la coulisse supérieure 11 de la bielle 20 sont formés par un chariot 30 articulé au moyen d'un axe 25 sur l'extrémité libre 23a du bras supérieur 23. Le chariot 30 comporte un galet porteur 31 à axe horizontal qui est destiné à soutenir la masse de la porte 1 en s'appuyant sur la coulisse supérieure 11 du rail de guidage 10. Pour que ce galet porteur 31 soit toujours correctement situé, et qu'il s'inscrive dans le tracé courbe de la portion d'extrémité 11a de la coulisse supérieure 11, le chariot 30 comporte aussi deux galets de guidage 32 à axe vertical disposés de part et d'autre dudit galet porteur 31.

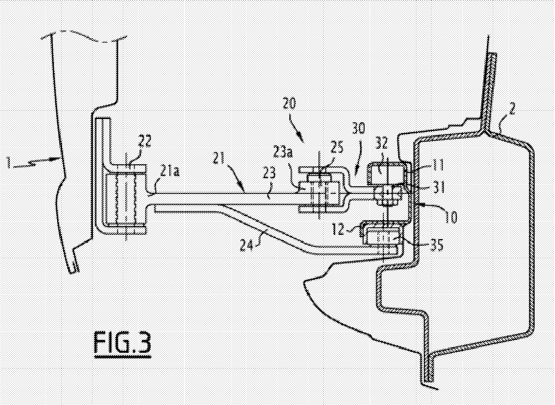

Ainsi que montré à la Fig. 3, les galets 32 de guidage circulent entre les joues verticales de la coulisse supérieure 11. Ils ne supportent aucun effort vertical et n'ont qu'une fonction de guidage pour que le galet porteur 31 reste au centre de la zone d'appui de cette coulisse supérieure 11 et pour qu'il soit toujours orienté dans la direction de la trajectoire de déplacement du chariot 30.

La masse de la porte 1 à soutenir est transmise au galet 31 porteur grâce à la rigidité des articulations 22 et 25 au niveau de la bielle 20 respectivement au niveau de la porte 1 et au niveau du chariot 30.

Les moyens de coulissement du bras inférieur 24 de la bielle 21 sur la coulisse inférieure 12 sont formés par un galet de guidage 35 à axe vertical, ainsi que montré sur les Figs. 2 et 3. Ce galet 35 circule entre les joues de la coulisse inférieure 12 et n'a qu'un rôle de guidage complémentaire qui détermine l'orientation convenable de la bielle 21 reliant le chariot 30 et la porte 1 lors de mouvements d'ouverture de cette porte 1. Il ne supporte que des efforts modérés pratiquement indépendants de la masse de la porte 1, et toujours dans un plan horizontal. Par contre, le chariot 30 cumule le rôle de porteur, associé au galet 31, avec le rôle de guide permettant à ce galet porteur 31 d'être toujours correctement situé et orienté dans la coulisse supérieure 11.

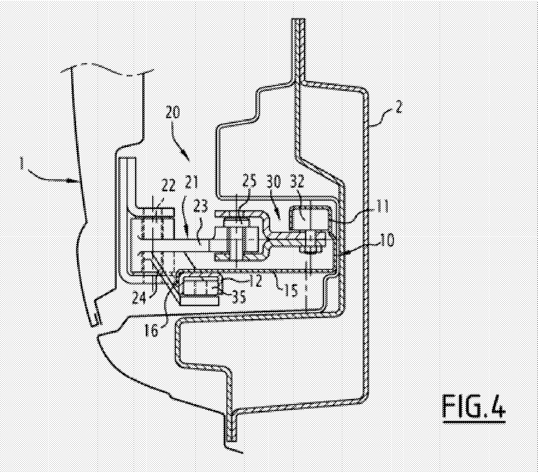

Lorsque la porte 1 est en position fermée, comme montrée sur les Figs. 1 et 4, cette porte 1 est maintenue par un système de verrous 8 montés sur un montant 9 de la caisse du véhicule et sur l'ossature de la porte 1. Dans cette position, le dernier galet 32 de guidage du chariot 30 est arrivé à l'extrémité de la portion d'extrémité 11a de la coulisse 11 du rail de guidage 10 qui est écartée vers le centre du véhicule automobile. La coulisse inférieure 12, rectiligne sur toute sa longueur, a gardé la même position grâce à une extension latérale 15 de la coulisse supérieure 11, comme montré à la Fig. 4. Le tracé de cette extension 15 est déterminé de telle manière que le bord tombé 16 de la coulisse inférieure 12 reste lui même constamment rectiligne et parallèle à la direction de déplacement de la porte 1. Il est également parallèle à la partie terminale rectiligne de la coulisse supérieure 11 vers la position ouverte de la porte 1.

Lors du déplacement progressif de la porte 1 entre la position fermée représentée à la Fig. 1 et la position écartée représentée à la Fig. 6, les galets 31 et 32 du chariot 30 portés par le bras supérieur 23 de la bielle 21 et le galet 35 porté par le bras inférieur 24 de ladite bielle 21, se déplacent respectivement dans la coulisse supérieure 11 et dans la coulisse inférieure 12 du rail de guidage 10.

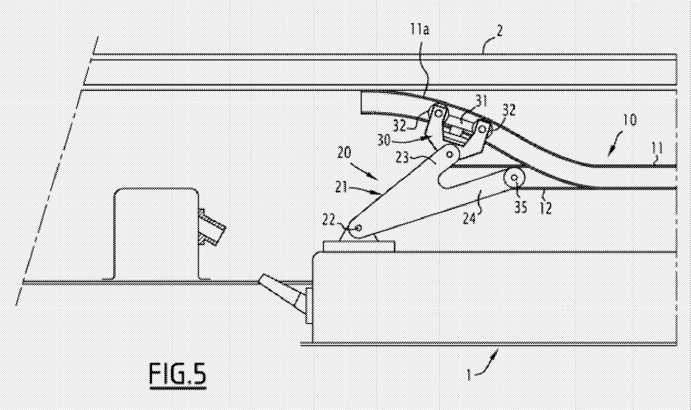

Ainsi que montré sur les Figs. 5 et 6, la bielle 21 pivote progressivement et la position prise par cette bielle 21 lorsqu'elle s'étend perpendiculairement à la porte 1, ainsi que représentée à la Fig. 6, correspond à un écartement suffisant de la porte 1 par rapport à la carrosserie du véhicule automobile pour permettre son coulissement.

Dans cette position, l'écartement entre le galet 35 et l'attache de bielle 21 sur le chariot 30 est suffisant pour assurer une fermeté convenable, particulièrement utile pour résister à des efforts transversaux résultant de sollicitations exercées éventuellement sur la poignée de manoeuvre de la porte 1.

Le dispositif de guidage selon l'invention permet de réduire convenablement la pénétration du rail de guidage qui n'interfère qu'avec le côté de l'habitacle du véhicule. Cette pénétration est diminuée à peu près de moitié par rapport aux dispositifs de guidage utilisés jusqu'à présent ce qui évite toute perturbation de l'âme du longeron ou du longeron intérieur formant des éléments importants pour la résistance du châssis du véhicule automobile.

La conjugaison des deux trajectoires déterminées par la coulisse supérieure et la coulisse inférieure du rail de guidage entraîne un pivotement de la bielle, lié aux déplacements de la porte. L'amplitude de cette rotation s'ajoute à la longueur de la bielle pour donner un déplacement total égal à celui d'un dispositif de guidage classique et permettant à la porte de s'écarter de la carrosserie du véhicule lors de son déplacement.

## Revendications

1. Dispositif de guidage d'une porte latérale (1) coulissante pour véhicule automobile, déplaçable entre une position de fermeture appliquée contre la carrosserie du véhicule et une position écartée de ladite carrosserie au moyen d'un mécanisme d'écartement (20) comportant une bielle (21) en forme de V dont la pointe (21 a) est articulée sur la porte (1) et comportant deux bras (23, 24) dont chaque extrémité (23a, 24a) est articulée sur des moyens de coulissement (30, 35) respectivement sur une coulisse supérieure (11) et une coulisse inférieure (12) d'un rail de guidage (10) s'étendant sur la longueur du véhicule, l'une des coulisses (11, 12) comportant une portion d'extrémité courbe, décalée vers l'intérieur du véhicule dans la région correspondant à la fin de la fermeture de la porte (1), **caractérisé en ce que** la portion d'extrémité décalée vers l'intérieur du véhicule est ménagée sur la coulisse supérieure (11) du rail de guidage (10) et les moyens de coulissement du bras supérieur (23) de la bielle (21) comprennent un chariot (30) comportant un galet porteur (31) à axe horizontal destiné à coopérer avec la coulisse supérieure (11) et deux galets de guidage (32) à axes verticaux disposés de part et d'autre du galet porteur (31) et destinés à coopérer avec les joues de ladite coulisse supérieure (11).

2. Dispositif selon la revendication 1, **caractérisé en ce que** les bras de la bielle (21) sont formés par un bras supérieur (23) et un bras inférieur (24) décalés l'un par rapport à l'autre dans une direction horizontale suivant la longueur du véhicule.

3. Dispositif selon la revendication précédente 1 ou 2, **caractérisé en ce que** les moyens de coulissement du bras inférieur (24) de la bielle (20) sont formés par un galet (35) à axe vertical destiné à coopérer avec les joues de la coulisse inférieure (12).

4. Porte coulissante (1) pour véhicule automobile, **caractérisée en ce qu'**elle est équipée d'un dispositif de guidage entre une position de fermeture appliquée contre la carrosserie du véhicule et une position écartée de ladite carrosserie, selon l'une quelconque des revendications précédentes.

5. Véhicule automobile, **caractérisé en ce qu'**il comporte au moins une porte coulissante (1) selon la revendication 4.

6. Porte coulissante (1) pour véhicule automobile, **caractérisée en ce qu'**elle est équipée d'un dispositif de guidage entre une position de fermeture appliquée contre la carrosserie du véhicule et une position écartée de ladite carrosserie, selon l'une quelconque des revendications précédentes.

7. Véhicule automobile, **caractérisé en ce qu'**il comporte au moins une porte coulissante (1) selon la revendication 6.
